# EUROPÄISCHE PATENTSCHRIFT

(11) **EP 2 279 073 B1**
(45) Veröffentlichungstag und Bekanntmachung des Hinweises auf die Patenterteilung: **09.05.2012**
(21) Anmeldenummer: 09757341.4
(22) Anmeldetag: 31.03.2009
(51) Int. Cl.: B29C 70/04, B64C 1/06

(54) **VERBUND UND STRUKTUR, INSBESONDERE IM LUFT- UND RAUMFAHRTBEREICH**
COMPOSITE AND STRUCTURE, PARTICULARLY IN THE AEROSPACE SECTOR
LIAISON ET STRUCTURE, EN PARTICULIER DANS LE DOMAINE AÉRONAUTIQUE ET SPATIAL

(30) Priorität: 30.05.2008 DE 102008002117; 30.05.2008 US 130391
(43) Veröffentlichungstag der Anmeldung: 02.02.2011
(73) Patentinhaber: Airbus Operations GmbH, 21129 Hamburg (DE)
(72) Erfinder: LÜTTIG, Helmut, 22119 Hamburg (DE)
(74) Vertreter: Isarpatent
(86) Internationale Anmeldenummer: PCT/EP2009/053773
(87) Internationale Veröffentlichungsnummer: WO 2009/146958

(56) Entgegenhaltungen:
- EP-A- 1 640 252
- DE-A1-102006 026 538
- GB-A- 457 369
- US-A1- 2003 164 623

## Beschreibung

Die vorliegende Erfindung bezieht sich auf einen Verbund, insbesondere im Luft- und Raumfahrtbereich, sowie auf eine Struktur, insbesondere auf einen Flugzeugrumpf.

Obwohl auf beliebige Luft- und Raumfahrzeuge anwendbar, werden die vorliegende Erfindung sowie die ihr zugrunde liegende Problematik in Bezug auf einen Flugzeugrumpf näher erläutert.

Es ist üblich geworden, insbesondere Rumpfschalen mit Ω-Stringern zu verstärken. Ω-stringer weisen einen Kammabschnitt und zwei Fußabschnitte auf, welche sich an jeweils gegenüberliegende Enden des Kammabschnitts anschließen. Der Kammabschnitt ist dabei üblicherweise im Querschnitt trapezförmig oder in etwa halbkreisförmig ausgebildet. Aufgrund dieses Aufbaus eignen sich Ω-Stringer besonders gut, solche Rumpfschalen gegen ein Knicken derselben auszusteifen.

Ein Versteifen einer Flugzeug-Rumpfaußenwand mittels einander kreuzend angeordneter Versteifungselemente mit Ω-Querschnitt ist zum Beispiel aus der GB-A-457369 zu entnehmen.

Als problematisch hat es sich nun herausgestellt, weitere Stringer oder andere Längselemente, wie beispielsweise Längsträger, mit solchen Ω-Stringern in deren Längsrichtung zu verbinden, wie es beispielsweise bei dem Aneinanderfügen mehrerer Rumpfsektionen zum Bilden eines Flugzeugrumpfs oder zur Lasteinleitung aus beispielsweise Längsträgerelementen erforderlich ist. Auch hat es sich als problematisch herausgestellt, solche Ω-Stringer mit Spanten über Clipse oder Schubkämme zu verbinden. Für beide Problemkreise ursächlich ist, dass sich der Kammabschnitt aufgrund seiner oberhalb beschriebenen geometrischen Ausgestaltung nur sehr schwerlich mit anderen Elementen verbinden lässt.

Es ist zwar bekannt geworden, beispielsweise Ω-Stringer mit anderen Stringern jeweils über deren Fußabschnitte zu verbinden. Dieser Ansatz ist jedoch dahingehend nachteilig, als dass die Füße der weiteren Stringer bzw. Ω-Stringer nur vergleichsweise geringe Lasten übertragen können.

Es ist daher Aufgabe der vorliegenden Erfindung, eine verbesserte Anbindungsmöglichkeit von Ω-Stringern insbesondere an andere Stringer, Längsträgerelementen, Spanten, Clipse und/oder Schubkämme bereitzustellen.

Erfindungsgemäß wird diese Aufgabe durch einen Verbund mit den Merkmalen des Patentanspruchs 1 und/oder durch eine Struktur mit den Merkmalen des Patentanspruchs 6 gelöst.

Demgemäß wird ein Verbund, insbesondere im Luft- und Raumfahrtbereich, mit einem Ω-Stringer, welcher einen Kammabschnitt aufweist, und einem Anschlusselement, welches an seinem einen Ende mit dem Kammabschnitt des Ω-Stringers verbunden und an seinem anderen Ende mit einem Standardkupplungselement verbindbar ist, bereitgestellt.

Ferner wird eine Struktur, insbesondere ein Flugzeugrumpf, bereitgestellt, welche den erfindungsgemäßen Verbund, einen Stringer sowie ein Standardkupplungselement, welches das Anschlusselement des Verbunds mit dem Stringer verbindet, aufweist. Anstelle des Stringers könnte hier gemäß einer anderen Ausgestaltung der Erfindung auch ein anderes Längselement verwendet werden.

Die der vorliegenden Erfindung zugrunde liegende Idee besteht darin, Ω-Stringer mit einer Anschlusszone auszubilden, welche einerseits mit dem Kammabschnitt des Ω-Stringers gekoppelt ist und daher die Übertragung vergleichsweise großer Lasten ermöglicht und andererseits mit einem Standardkupplungselement verbindbar ist, um so die Vorteile solcher Standardkupplungselemente bei der Verbindung von Ω-stringer mit anderen Stringern, beispielsweise T- oder anderen Ω-stringer, zu nutzen. Diese Vorteile sind insbesondere eine hohe Verfügbarkeit solcher Standardkupplungselemente, eine einfache Verbindbarkeit dieser mit einem Hautabschnitt, eine einfache Hindurchführbarkeit dieser durch Ausnehmungen in Spanten, eine einfachere Verbindbarkeit dieser mit Spanten über Clipse oder Schubkammelementen, eine einfache Verbindbarkeit dieser mit weiteren Stringern, beispielsweise T- oder L-Stringern, aufgrund korrespondierender Geometrien und schließlich auch ein einfacher Toleranzausgleich zwischen den Ω-stringer und den weiteren mit diesen in Längsrichtung zu verbindenden Stringern.

Aus den Unteransprüchen ergeben sich vorteilhafte Weiterbildungen und Verbesserungen der Erfindung.

Bei dem erfindungsgemäßen Verbund weist das Anschlusselement an seinem einen Ende einen I-förmigen Querschnitt mit zwei Gurtabschnitten und einem diese verbindenden Stegabschnitt auf, wobei einer der Gurtabschnitte mit dem Kammabschnitt des Ω-stringer verbunden ist. Damit ergibt sich eine sehr belastbare Verbindung zwischen dem Anschlusselement und dem Ω-Stringer.

Gemäß einer weiter bevorzugten Weiterbildung des erfindungsgemäßen Verbunds setzt sich der Kammabschnitt des Ω-Stringers aus einem Dachabschnitt und zwei sich an gegenüberliegende Enden des Dachabschnitts anschließenden Schrägabschnitten zusammen. Der Kammabschnitt ist im Querschnitt also vorzugsweise in etwa trapezförmig (einseitig offenes Trapez) ausgebildet, was natürlich nicht ausschließt, dass der Kammabschnitt im Querschnitt auch beispielsweise eine in etwa rechteckige Form haben könnte. Ferner ist der eine Gurtabschnitt vorzugsweise mit dem Dachabschnitt über dessen gesamte Breite verbunden. Bevorzugt sind an dem Gurtabschnitt angeformte Schrägen vorgesehen, welche mit den Schrägabschnitten des Kammabschnitts wenigstens teilsweise überlappend verbunden sind. Damit ergibt sich ein sehr großflächiger Verbindungsbereich zwischen dem Ω-Stringer und dem Anschlusselement, was sich insbesondere bei einer Verklebung des Anschlusselements mit dem Ω-Stringer auf die maximal übertragbaren Lasten positiv auswirkt.

Die Schrägabschnitte können beispielsweise unter einem Winkel von in etwa 30 bis 70 ° gegenüber dem Dachabschnitt verlaufen.

Gemäß einer weiter bevorzugten Weiterbildung des erfindungsgemäßen Verbunds weist dieser weiterhin einen flächigen Abschnitt auf. Der Ω-Stringer ist vorzugsweise mit zwei Fußabschnitten gebildet, welche sich an gegenüberliegende Enden des Kammabschnitts anschließen und im Wesentlichen entgegengesetzt zueinander ausgerichtet sind. Dabei sind die Fußabschnitte des Ω-Stringers sowie der andere Abschnitt des Anschlusselements mit dem flächigen Abschnitt vorzugsweise verbunden. Bei dem flächigen Abschnitt randelt es sich vorzugsweise um eine Haut eines Luft- oder Raumfahrzeugs, insbesondere eine Rumpfhaut. Allerdings könnte der flächige Abschnitt genauso beispielsweise Bestandteil eines Zwischendecks in einem Flugzeug sein.

Gemäß einer weiter bevorzugten Weiterbildung des erfindungsgemäßen Verbunds weist das Anschlusselement an seinem anderen Ende einen wenigstens L-förmigen Querschnitt mit einem Fußabschnitt, welcher mit dem flächigen Element verbunden ist, und einen Stegabschnitt auf, wobei der wenigstens L-förmige Querschnitt durch Zurückschneiden des I-förmigen (auch als Doppel T-förmig bezeichnet) Querschnitts gebildet ist. Mit "wenigstens L-förmig" ist vorliegend gemeint, dass der Querschnitt des Anschlusselements wenigstens einen L-förmigen Bestandteil aufweist. Bevorzugt ist der Querschnitt des Anschlusselements L-, C-, Z- oder T-förmig ausgebildet, deren Querschnitte gemäß vorliegender Definition jeweils einen L-förmigen Bestandteil aufweisen. Ein solcher wenigstens L-förmiger Querschnitt lässt sich besonders gut mittels seines Stegabschnitts mit Clipsen oder Schubkämmen und/oder mittels seines Fußabschnitts mit dem Hautabschnitt oder einem Hautdoppler verbinden. Vor allem aber lässt sich der wenigstens L-förmige Querschnitt problemlos mit einem Standardkupplungselement mit einem L-, C-, Z- oder T-förmigen Querschnitt verbinden.

Gemäß einer weiter bevorzugten Weiterbildung des erfindungsgemäßen Verbunds weist das Anschlusselement einen Anbringungsabschnitt zum Anbringen eines Schubkamms oder Clips, insbesondere eines Spantstützwinkels, auf.

Gemäß einer bevorzugten Weiterbildung der erfindungsgemäßen Struktur weist das Standardkupplungselement einen L-, C-, Z- oder T-förmigen Querschnitt auf. Vorzugsweise ist das Standardkupplungselement als Stringer mit einem in etwa konstanten Querschnitt ausgebildet. Solche Kupplungselemente sind universell einsetzbar und weisen eine für eine Anbindung an andere Elemente, beispielsweise einen Hautabschnitt, günstige Geometrie auf und sind außerdem vergleichsweise steif.

Gemäß einer weiter bevorzugten Weiterbildung der erfindungsgemäßen Struktur ist der Stringer mittels eines weiteren Anschlusselements mit dem Standardkupplungselement verbunden. Dabei bilden der Stringer sowie das weitere Anschlusselement einen weiteren, erfindungsgemäßen Verbund. Gemäß dieser Weiterbildung wird also eine Struktur mit folgender Reihenfolge gebildet: Q-Stringer - Anschlusselement - Standardkupplungselement - Anschlusselement - Q-Stringer.

Gemäß einer weiter bevorzugten Weiterbildung der erfindungsgemäßen Struktur ist ein Spant vorgesehen, welcher eine Ausnehmung aufweist, durch welche das Standardkupplungselement geführt ist. Eine besondere Anpassung der Ausnehmung hinsichtlich ihres Querschnitts an das hindurchgeführte Element ist daher nicht erforderlich.

Gemäß einer weiter bevorzugten Weiterbildung der erfindungsgemäßen Struktur ist der Spant mittels eines Stützwinkels mit dem Anbringungsabschnitt des Anbindungselements oder weiteren Anschlusselements verbunden. Ein Anbringen des Stützwinkels an dem Anbringungsabschnitt des Anschlusselements ist wegen der guten Zugänglichkeit des Anbringungsabschnitts mit geringem Aufwand zu realisieren.

Vorzugsweise sind der Ω-Stringer und/oder das Anschlusselement mittels eines Dopplers mit dem flächigen Abschnitt verbunden.

Vorzugsweise weist der Ω-Stringer, das Anschlusselement, das Standardkupplungselement, der Spant, der flächige Abschnitt, der Doppler und/oder der Stützwinkel einen Faserverbundwerkstoff, insbesondere einen CFK, auf.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: in einer perspektivischen Ansicht einen Verbund gemäß einem Ausführungsbeispiel der vorliegenden Erfindung;
- Fig. 2: einen Schnitt A-A aus Fig. 1;
- Fig. 3: einen Schnitt B-B aus Fig. 1;
- Fig. 4: einen Schnitt C-C aus Fig. 1;
- Fig. 5: einen Schnitt D-D aus Fig. 1;
- Fig. 6: einen Schnitt E-E aus Fig. 1; und
- Fig. 7: eine Struktur gemäß einem Ausführungsbeispiel der Erfindung, welche die Anordnung aus Fig. 6 und ein Standardkupplungselement aufweist.

In den Figuren bezeichnen gleiche Bezugszeichen gleiche oder funktionsgleiche Komponenten, soweit nichts Gegenteiliges angegeben ist.

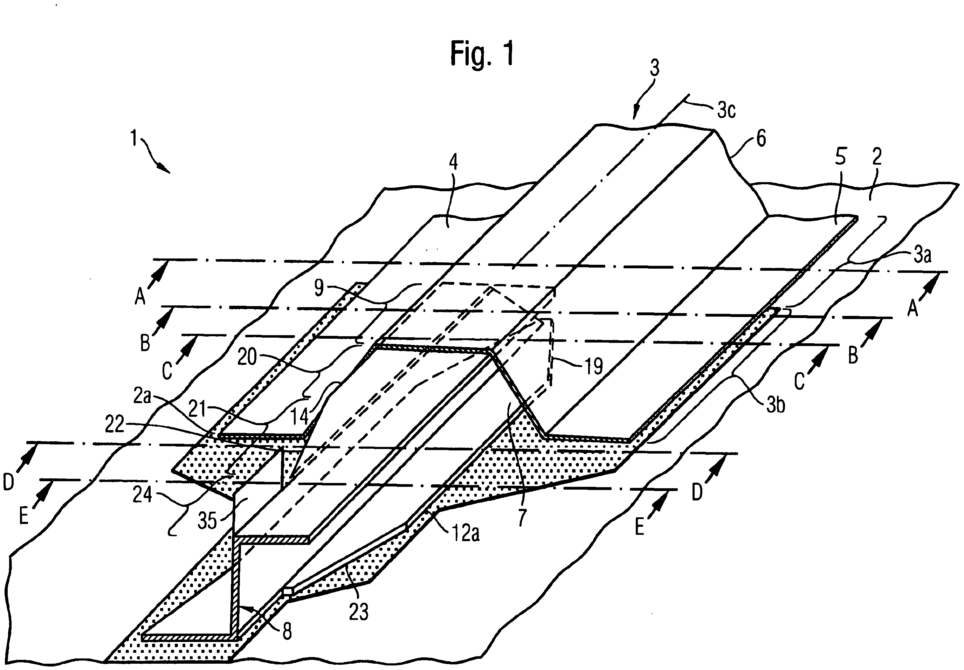

Fig. 1 zeigt in einer perspektivischen Ansicht einen Verbund 1 gemäß einem bevorzugten Ausführungsbeispiel der vorliegenden Erfindung.

Der Verbund 1 weist gemäß dem vorliegenden Ausführungsbeispiel eine Rumpfschale 2 aus Faserverbundwerkstoff auf, auf welche ein Ω-Stringer 3, ebenfalls aus Faserverbundwerkstoff, aufgebracht, insbesondere aufgenietet oder aufgeklebt, ist. Die Rumpfschale 2 bildet beispielsweise einen Abschnitt einer nicht weiter dargestellten Rumpftonne. Der Ω-Stringer 3 erstreckt sich gemäß dem vorliegenden Ausführungsbeispiel in Längsrichtung 3c der Rumpfschale 2.

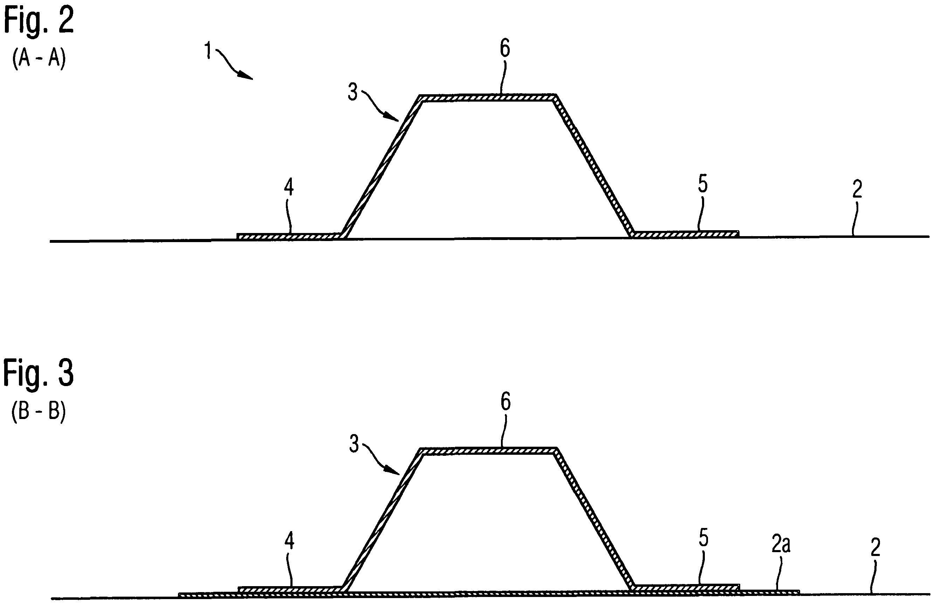

Der Ω-Stringer 3 setzt sich aus Fußabschnitten 4, 5 und einem Kammabschnitt 6 zusammen, welcher trapezförmig ausgebildet ist und die Fußabschnitte 4, 5 miteinander verbindet. In seinem Mittenbereich 3a ist der Ω-Stringer 3 mittels seiner Fußabschnitte 4, 5 direkt mit der Rumpfschale 2 verbunden (s. Fig. 2), während er in seinem Endbereich 3b mittels seiner Fußabschnitte 4,5 über einen Doppler 2a (s. Fig. 3), ebenfalls aus Faserverbundwerkstoff, mit der Rumpfschale 2 verbunden ist. Der Doppler 2a hat dabei die Aufgabe, den Verbund 1 weiter zu verstärken. In dem Übergangsbereich zwischen dem Mittenbereich 3a und dem Endbereich 3b weist der Ω-stringer 3 vorzugsweise eine nicht dargestellte Stufe auf, um so den Doppler 2a aufzunehmen.

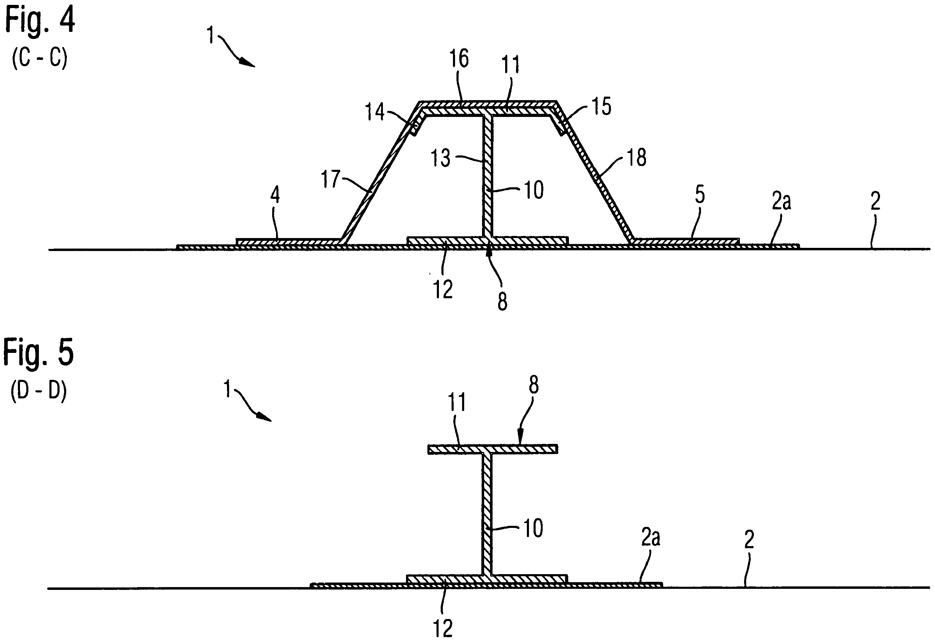

In die Öffnung 7 des Kammabschnittes des Q-Stringers 3 ist ein Anschlusselement 8 eingeschoben. Das Anschlusselement 8 weist, wie Fig. 4 zu entnehmen, wenigstens in dem Bereich 9, in dem es sich in den Ω-Stringer 3 hineinerstreckt, einen I-förmigen Querschnitt 10 auf, welcher sich aus einem Obergurt 11 und einem Untergurt 12, welche über einen Steg 13 verbunden sind, zusammensetzt. Vorzugsweise sind an dem Obergurt 11 Schrägen 14 und 15 angeformt, die sich beispielsweise unter einem Winkel von in etwa 60 ° zu dem Obergurt 11 erstrecken. Der Obergurt 11 ist mit einem Dachabschnitt 16 des Kammabschnitts 6 des Ω-Stringers 3 verbunden und die Schrägen 14, 15 sind jeweils mit Schrägabschnitten 17 und 18 des Kammabschnitts 6 teilweise überlappend verbunden. Der Untergurt 12 kann zur Gewichtseinsparung, wie in Fig. 1 dargestellt, in dem Bereich 9 mit einer Pfeilung 19 versehen sein, d.h. der Untergurt 11 ist zu seinem Ende hin an beiden Seiten schräg abgeschnitten.

Dem Bereich 9 nachgeordnet - also weg vom Ende des Q-Stringers 3 - weist der Verbund 1 einen Bereich 20 auf. In dem Bereich 20 stellt sich ein Querschnitt durch den Verbund 1 wie in Fig. 5 dargestellt dar. Der Querschnitt des Anschlusselements 8 ist in dem Bereich 20 auf einen I-förmigen Querschnitt "reduziert", d.h. auf die Schrägen 14, 15 wird aus Gewichtseinsparungsgründen verzichtet, da ihnen hauptsächlich die Aufgabe zukommt, für eine gute Verklebung zwischen dem Anschlusselement 8 und dem Kammabschnitt 6 des Ω-Stringers 3 zu sorgen.

An den Bereich 20 schließt sich ein Bereich 21 an, in welchem der Obergurt 11, s. Fig. 1, an seiner Kante 11a mittels einer Schräge 22 bis zum Steg 13 zurückgeschnitten ist und der Untergurt 12 an seiner der Kante 11a gegenüberliegenden Kante 12a mittels einer Schräge 23 bis zu dem Steg 13 zurückgeschnitten ist.

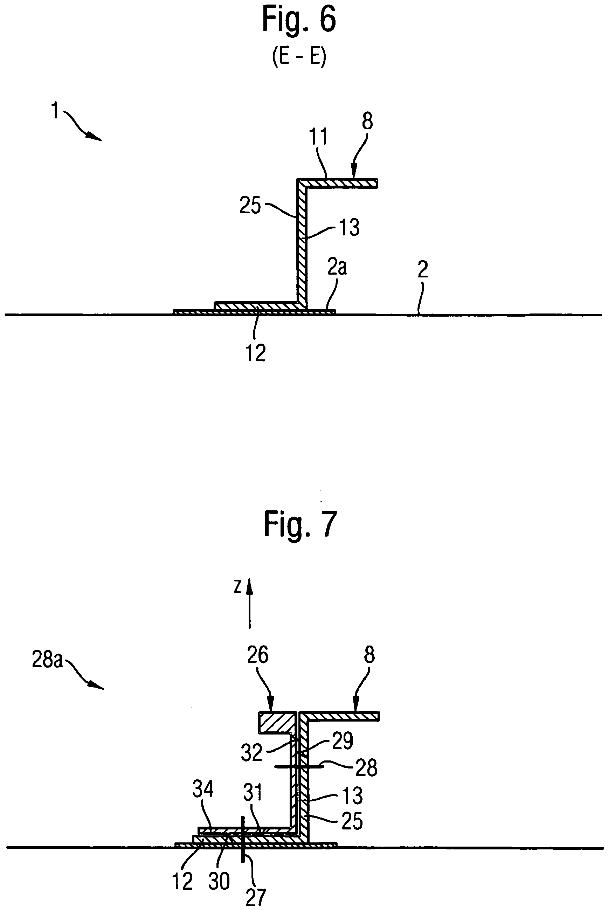

Damit ergibt sich, dass das Anschlusselement 8 in einem dem Bereich 21 nachgeordneten Bereich 24 einen wie in Fig. 6 dargestellten Z-förmigen Querschnitt 25 aufweist. Wie Fig. 6 zu entnehmen, bilden der Untergurt 12 und der Steg 13 des Kupplungselements 8 einen L-förmigen Bestandteil des gesamten Querschnitts 25 des Anschlusselements 8. Vorzugsweise weist das Anschlusselement 8 in dem Bereich 24 einen Anbringungsabschnitt 35 auf, mittels welchem das Anschlusselement 8 mit einem Stützwinkel zur Verbindung mit einem nicht dargestellten Spant einfach, beispielsweise mittels Nieten oder Verklebung, verbindbar ist.

Vorzugsweise ist das Anschlusselement 8 aus einem Stück gebildet und wird durch entsprechendes Zuschneiden der Faserlagen, welche den Obergurt 11 und den Untergurt 12 bilden, hergestellt.

Der Doppler 2a verbindet durchgehend den Untergurt 12 des Anschlusselements mit der Rumpfschale 2 und ist dabei derart zugeschnitten, dass er dem Verlauf des Untergurts 12 in einer Draufsicht aus Fig. 1 in etwa folgt.

Wie in Fig. 7 dargestellt, kann der nun Z-förmige Querschnitt 25 des Anschlusselements 8 sehr einfach mit einem Standardkupplungselement 26 beispielsweise mittels einer Verklebung oder Nieten 27, 28 verbunden werden, wodurch eine Struktur 28a entsteht.

Gemäß dem vorliegenden Ausführungsbeispiel weist das Standardkupplungselement 26 einen C-förmigen Querschnitt auf. Das Standardkupplungselement 26 und das Anschlusselement 8 weisen dabei korrespondierende Flächen 29, 30 bzw. 31, 32 auf, die eine stabile Verbindung begünstigen. Gemäß dem vorliegenden Ausführungsbeispiel ist dabei der Steg 33 des Kupplungselements 26 mit dem Steg 13 des Anschlusselements 8 und der Fuß 34 des Kupplungselements 26 mit dem Untergurt 12 des Kupplungselements 8 verbunden.

Das Kupplungselement 26 kann nun mit einem weiteren, nicht dargestellten Verbund, welcher einen Stringer, insbesondere einen Ω-Stringer 10, und gegebenenfalls ein Anschlusselement 8 aufweist, einfach verbunden werden und wegen seiner Biegsamkeit um die z-Achse (s. Fig. 7), soweit der Verbund 1 nicht mit dem weiteren Verbund fluchtet, für einen Toleranzausgleich sorgen. Somit können beispielsweise einfach zwei Rumpftonnen (nicht dargestellt), welche jeweils den Verbund 1 aufweisen, miteinander verbunden werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Insbesondere ist sie nicht auf die Anwendung auf eine Flugzeugrumpfstruktur beschränkt. Vielmehr kann sie auf beliebige andere tragende und nicht tragende Strukturen angewendet werden.

Die vorliegende Erfindung schafft einen Verbund, insbesondere im Luft- und Raumfahrtbereich, mit einem Ω-Stringer, welcher einen Kammabschnitt aufweist, und einem Anschlusselement, welches an seinem einen Ende mit dem Kammabschnitt des Q-Stringers verbunden ist und an seinem anderen Ende mit einem Standardkupplungselement verbindbar ist. Die der vorliegenden Erfindung zugrunde liegende Idee besteht darin, Ω-Stringer mit einer Anschlusszone auszubilden, welche einerseits mit dem Kammabschnitt des Q-Stringers gekoppelt ist und daher die Übertragung vergleichsweise großer Lasten ermöglicht und andererseits mit einem Standardkupplungselement verbindbar ist, um so die Vorteile solcher Standardkupplungselemente bei der Verbindung von Ω-Stringern mit anderen Stringern, beispielsweise T- oder anderen Ω-Stringern, oder Trägerelementen zu nutzen.

### Bezugszeichenliste

- 1: Verbund
- 2: Rumpfschale
- 2a: Doppler
- 3: Ω-Stringer
- 3a: Mittenbereich
- 3b: Endbereich
- 3c: Längsrichtung
- 4: Fußabschnitt
- 5: Fußabschnitt
- 6: Kammabschnitt
- 7: Öffnung
- 8: Anschlusselement
- 9: Bereich
- 10: I-förmiger Querschnitt
- 11: Obergurt
- 11a: Kante
- 12: Untergurt
- 12a: Kante
- 13: Steg
- 14: Schräge
- 15: Schräge
- 16: Dach
- 17: Schrägabschnitte
- 18: Schrägabschnitte
- 19: Pfeilung
- 20: Bereich
- 21: Bereich
- 22: Schräge
- 23: Schräge
- 24: Bereich
- 25: Z-förmiger Querschnitt
- 26: Standardkupplungselement
- 27: Niet
- 28: Niet
- 28a: Struktur
- 29: korrespondierende Fläche
- 30: korrespondierende Fläche
- 31: korrespondierende Fläche
- 32: korrespondierende Fläche
- 33: Steg
- 34: Fuß
- 35: Anbringungsabschnitt

## Patentansprüche

1. Verbund (1), insbesondere im Luft- und Raumfahrtbereich, mit einem Ω-stringer (3), welcher einen Kammabschnitt (6) aufweist; **gekennzeichnet durch**
ein Anschlusselement (8), welches sich an seinem einen Ende (9), das einen I-förmigen Querschnitt mit zwei Gurtabschnitten (11, 12) und einem diese verbindenden Stegabschnitt (13) aufweist, in den Ω-stringer (3) hineinerstreckt, wobei einer der Gurtabschnitte (11) mit dem Kammabschnitt (6) des Ω-stringers (3) verbunden ist, wobei das Anschlusselement (8) an seinem anderen Ende (24) mit einem Standardkupplungselement (26) verbindbar ist.

2. Verbund nach Anspruch 1,
**dadurch gekennzeichnet,**
**dass** sich der Kammabschnitt (6) des Ω-stringers (3) aus einem Dachabschnitt (16) und zwei sich an gegenüberliegende Enden des Dachabschnitts (16) anschließenden Schrägabschnitten (17, 18) zusammensetzt; und
**dass** der eine Gurtabschnitt (11) mit dem Dachabschnitt (16) über dessen gesamte Breite und an dem Gurtabschnitt (11) angeformte Schrägen (14, 15) mit den Schrägabschnitten (17, 18) teilweise überlappend verbunden sind.

3. Verbund nach einem der Ansprüche 1 oder 2,
**dadurch gekennzeichnet,**
**dass** der Verbund (1) weiterhin einen flächigen Abschnitt (2) aufweist; und
**dass** der Ω-stringer (3) mit zwei Fußabschnitten (4, 5) versehen ist, welche sich an gegenüberliegende Enden des Kammabschnitts (6) anschließen und im Wesentlichen entgegengesetzt zueinander ausgerichtet sind;
wobei die Fußabschnitte (4, 5) des Ω-stringers (3) sowie der andere Gurtabschnitt (12) des Anschlusselements (8) mit dem flächigen Abschnitt (2), insbesondere mittels eines Dopplers (2a), verbunden sind.

4. Verbund nach Anspruch 3,
**dadurch gekennzeichnet,**
**dass** das Anschlusselement (8) an seinem anderen Ende (24) einen wenigstens L-förmigen Querschnitt (25) mit einem Fußabschnitt (12), welcher mit dem flächigen Element (2) verbunden ist, und einen Stegabschnitt (13) aufweist, wobei der wenigstens L-förmige Querschnitt (25) durch Zurückschneiden des I-förmigen Querschnitts (10) gebildet ist.

5. Verbund nach wenigstens einem der vorhergehenden Ansprüche,
**dadurch gekennzeichnet,**
**dass** das Anschlusselement (8) einen Anbringungsabschnitt (35) zum Anbringen eines Schubkamms oder Clips, insbesondere eines Spantstützwinkels, aufweist.

6. Struktur (28a), insbesondere Flugzeugrumpf, mit:
einem Verbund (1) nach wenigstens einem der vorhergehenden Ansprüche;
einem Stringer; und
einem Standardkupplungselement (26), welches das Anschlusselement (8) des Verbunds (1) mit dem Stringer verbindet.

7. Struktur nach wenigstens einem der vorhergehenden Ansprüche,
**dadurch gekennzeichnet,**
**dass** das Standardkupplungselement (26) einen L-, C-, Z-, oder T-förmigen Querschnitt aufweist.

8. Struktur nach wenigstens einem der vorhergehenden Ansprüche,
**dadurch gekennzeichnet,**
**dass** der Stringer mittels eines weiteren Anschlusselements mit dem Standardkupplungselement (8) verbunden ist und der Stringer sowie das weitere Anschlusselement einen weiteren Verbund nach wenigstens einem der vorhergehenden Ansprüche 1 bis 5 bilden.

## Claims

1. Composite (1), in particular in the field of aviation and aerospace, comprising an
Ω-stringer (3) that comprises a comb portion (6);
**characterized by**
a connecting member (8) that, at its one end (9) comprising an I-shaped cross-section with two flange portions (11, 12) and a web portion (13) connecting them, extends into the Ω-stringer (3), one of the flange portions (11) being connected to the comb portion (6) of the Ω-stringer (3), wherein the connecting member (8) can be connected at its other end (24) to a standard coupling member (26).

2. Composite according to claim 1,
**characterized in that**
the comb portion (6) of the Ω-stringer (3) is composed of a roof portion (16) and two bevel portions (17, 18) connecting to opposite ends of the roof portion (16); and **in that** the one of the flange portions (11) is connected to the roof portion (16) over the entire width thereof and bevels (14, 15) formed integrally on the flange portion (11) are connected to the bevel portions (17, 18), overlapping in part.

3. Composite according to claim 1 or 2,
**characterized in that**
the composite (1) further comprises a planar portion (2); and
**in that** the Ω-stringer (3) is provided with two foot portions (4, 5), which connect to opposite ends of the comb portion (6) and are oriented so as to be substantially mutually opposed;
the foot portions (4, 5) of the Ω-stringer (3) and the other flange portion (12) of the connecting member (8) being connected to the planar portion (2), in particular by a doubler (2a).

4. Composite according to claim 3,
**characterized in that**
the connecting member (8) comprises, at its other end (24), an at least L-shaped cross-section (25) with a foot portion (12) that is connected to the planar member (2), and a web portion (13), the at least L-shaped cross-section (25) being formed by trimming the I-shaped cross-section (10).

5. Composite according to at least one of the preceding claims,
**characterized in that**
the connecting member (8) comprises a mounting portion (35) for mounting a shear comb or clip, in particular a frame angle bracket.

6. Structure (28a), in particular a fuselage of an aircraft, comprising:
a composite (1) according to at least one of the preceding claims;
a stringer; and
a standard coupling member (26) that connects the connecting member (8) of the composite (1) to the stringer.

7. Structure according to at least one of the preceding claims,
**characterized in that**
the standard coupling member (26) comprises an L-, C-, Z- or T-shaped cross-section.

8. Structure according to at least one of the preceding claims,
**characterized in that**
the stringer is connected to the standard coupling member (8) by a further connecting member, and the stringer and the further connecting member form a further composite according to at least one of the preceding claims 1 to 5.

## Revendications

1. Assemblage (1), en particulier dans le domaine aéronautique et astronautique, comprenant un raidisseur en Ω (3) muni d'un segment de crête (6); **caractérisé par** un élément de raccord (8) qui s'étend à l'intérieur du raidisseur en Ω (3) à son extrémité (9) à section transversale en I et comportant deux portions en semelle (11, 12) et une portion en âme (13) qui les relie, une des portions en semelle (11) étant reliée au segment de crête (6) du raidisseur en Ω (3), l'élément de raccord (8) pouvant être relié à son autre extrémité (24) à un élément de couplage standard (26).

2. Assemblage selon la revendication 1, **caractérisé en ce**
**que** le segment de crête (6) du raidisseur en Ω (3) se compose d'une portion en toiture (16) et de deux portions inclinées (17, 8) qui se raccordent aux extrémités opposées de la portion en toiture (16) et que l'une des portions en semelle (11) est reliée à la portion en toiture (16) sur toute la largeur de celle-ci et que des parties inclinées (14, 5) façonnées sur la portion en semelle (11) sont reliées aux portions inclinées (17,18) en les recouvrant en partie.

3. Assemblage selon l'une des revendications 1 ou 2, **caractérisé en ce que** l'assemblage (1) comporte en outre une portion plate (2) et que le raidisseur en Ω (3) est muni de deux segments de pied (4, 5) qui se raccordent à des extrémités opposées du segment de crête (6) et sont pratiquement orientés en sens contraire, les segments de pied (4, 5) du raidisseur en Ω (3) ainsi que l'autre portion en semelle (12) de l'élément de raccord (8) étant reliées à la portion plate (2), en particulier à l'aide d'un élément intermédiaire (2a).

4. Assemblage selon la revendication 3, **caractérisé en ce que**, à son autre extrémité (24), l'élément de raccord (8) comporte une section transversale (25) au moins en L munie d'un segment de pied (12) relié à l'élément plat (2) et une portion en âme (13), la section transversale (25) au moins en L étant formée en taillant la section transversale (10) en I.

5. Assemblage selon au moins une des revendications précédentes, **caractérisé en ce que** l'élément de raccord (8) comporte une portion d'installation (35) pour installer un peigne de cisaillement ou un clip, en particulier une équerre d'appui pour un cadre.

6. Structure (28a), en particulier fuselage d'avion, comprenant :
- un assemblage (1) selon au moins une des revendications précédentes;
- un raidisseur; et
- un élément de couplage standard (26) qui relie l'élément de raccord (8) de l'assemblage (1) au raidisseur.

7. Structure selon au moins une des revendications précédentes, **caractérisée en ce que** l'élément de couplage standard (26) a une section transversale en L, en C, en Z ou en T.

8. Structure selon au moins une des revendications précédentes, **caractérisée en ce que** le raidisseur est relié à l'élément de couplage standard (8) à l'aide d'un autre élément de raccord et le raidisseur ainsi que l'autre élément de raccord forment un autre assemblage selon au moins une des revendications précédentes 1 à 5.
